# EUROPEAN PATENT APPLICATION

(11) **EP 3 001 591 A1**
(43) Date of publication of application: **30.03.2016**
(21) Application number: 14306493.9
(22) Date of filing: 26.09.2014
(51) Int. Cl.: H04J 14/02

(54) **Provisioning an optical connection in an optical network**

(71) Applicant: ALCATEL LUCENT, 92100 Boulogne-Billancourt (FR)
(72) Inventor: Morea, Annalisa, 91620 Nozay (FR); Verchere, Dominique, 91620 Nozay (FR)
(74) Representative: Loyer & Abello

(57) **Abstract**

A method for provisioning an optical connection in an optical network, wherein the method comprises:
- selecting an upstream capacity in the plurality of upstream capacities higher than the upstream load, determining an upstream transparent reach of the optical destination transponder as a function of the upstream capacity,
- selecting a downstream capacity in the plurality of downstream capacities higher than the downstream load, determining a downstream transparent reach of the optical source transponder as a function of the downstream capacity,
- if the upstream transparent reach (r) is smaller than a total length of the optical path, provisioning one or more upstream regeneration points (18) along the optical path, so that any two consecutive network elements of the sequence consisting of the destination node, the one or more upstream regeneration points and the source node are separated by a distance lower than the upstream transparent reach,
- performing the above step for the downstream transparent reach (r'),
provisioning one or more downstream regeneration points (27) along the optical path.

## Description

### Field of the invention

The invention relates to the technical field of optical communication systems, in particular methods and systems for provisioning a bidirectional asymmetric optical connection in an optical network.

### Background

Transparent mesh networks are networks with optical bypass of intermediate nodes whenever possible, and no regenerators whenever possible. A regenerator is an Optical/Electrical/Optical device that is a kind of repeater to help an optical signal to continue its journey successfully when the signal becomes weaker and distorted after having travelled through a significant distance. Indeed, optical Signals are degraded while propagating in the optical medium due to physical effects. Physical degradations depend on a plurality of factors, such as the distance to propagate over, the modulation format of the optical signal propagating, the characteristics of the optical links, the frequency occupation, etc. It is preferable to limit as far as possible the number of regenerators in an optical network as they are energy-greedy and costly.

### Summary

In an embodiment, the invention provides a method for provisioning an optical connection in an optical network,
wherein the method comprises:
- receiving a connection demand comprising a source node identifier, a destination node identifier, an upstream load in an upstream direction from the destination node to the source node and a downstream load in a downstream direction from the source node to the destination node,
wherein the optical network comprises the source node comprising an optical source transponder capable of generating optical signals having a plurality of downstream capacities, and the destination node comprising an optical destination transponder capable of generating optical signals having a plurality of upstream capacities,
- selecting an optical path connecting the source node to the destination node and a wavelength available for provisioning an optical connection along the optical path in both directions,
- selecting an upstream capacity in the plurality of upstream capacities higher than the upstream load, determining an upstream transparent reach of the optical destination transponder as a function of the upstream capacity,
- selecting a downstream capacity in the plurality of downstream capacities higher than the downstream load, determining a downstream transparent reach of the optical source transponder as a function of the downstream capacity,
- if the upstream transparent reach is smaller than a total length of the optical path, locating one or more upstream regeneration points along the optical path, so that any two consecutive network elements of the sequence consisting of the destination node, the one or more upstream regeneration points and the source node are separated by a distance lower than the upstream transparent reach,
- if the downstream transparent reach is smaller than a total length of the optical path, locating one or more downstream regeneration points along the optical path, so that any two consecutive network elements of the sequence consisting of the destination node, the one or more downstream regeneration points and the source node are separated by a distance lower than the downstream transparent reach.

A node may be implemented in various manners. For example, a node may be implemented as an optical cross-connect device, a Reconfigurable Optical Add and Drop Multiplexer (ROADM) and the like.

According to embodiments, such a method can comprise one or more of the features below.

The regeneration points in both directions may be located in the same nodes or in different nodes.

In an embodiment, if the downstream transparent reach is greater than the upstream transparent reach, then the upstream direction is said more demanding than the downstream direction, if the upstream transparent reach is greater than the downstream transparent reach, then the downstream direction is said more demanding than the upstream direction,
the method comprising:
provisioning the predefined regeneration points of the most demanding direction, and, for the less demanding direction, selecting a subset of the provisioned regeneration points of the most demanding direction for provisioning the regeneration points of the less demanding direction.

In an embodiment, the method further comprises, for each regeneration point of the subset, provisioning a bidirectional regenerator adapted to regenerate optical signals in both the upstream direction and the downstream direction,
for each regeneration point of the most demanding direction that is not part of the subset, provisioning a unidirectional regenerator adapted to regenerate optical signals in the most demanding direction. Thanks to these features, it is possible to employ bidirectional regenerators even when the traffic is asymmetrical.

In an embodiment, the method further comprises storing in a data repository the optical path, upstream and downstream capacities, wavelength and the regeneration points provisioned in both directions.

In an embodiment, the optical source transponder and optical destination transponder are flexible transponders adapted to employ a plurality of modulation formats,
the method further comprising a step of configuring the optical source transponder and the optical destination transponder by selecting a downstream modulation format and an upstream modulation format among the plurality of modulation formats in relation with the selected downstream capacity and selected upstream capacity respectively.

In an embodiment, the optical source transponder and optical destination transponder are flexible transponders adapted to employ a plurality of symbol rates, the method further comprising a step of configuring the optical source transponder and the optical destination transponder by selecting a downstream symbol rate and an upstream symbol rate among the plurality of symbol rates in relation with the selected downstream capacity and selected upstream capacity respectively.

In an embodiment, the method further comprises,
controlling the establishment of the bidirectional connection between the optical source node and the optical destination node as a Label-Switched Path by a Generalized MPLS control plane, wherein the method further comprises the steps of exchanging connection request message (e.g. RSVP-TE Path) and connection accept message (e.g. RSVP-TE Resv) between the source node and the destination node, wherein
the Path message carries the objects GENERALIZED_LABEL_REQUEST, UPSTREAM_LABEL, LABEL_SET, SENDER_TSPEC, UPSTREAM_FLOWSPEC of the RSVP-TE protocol to define the attributes of the optical connection requested and the connection request message Path is propagated from the source node to the destination node along the optical path, and wherein the Resv message carries the objects GENERALIZED_LABEL, FLOWSPEC, UPSTREAM_TSPEC of the RSVP-TE protocol and is propagated from the destination node to the source node along the optical path to accept the resource reservation requested for the optical connection, wherein the SENDER_TSPEC object and FLOWSPEC object are both set to reserve the selected downstream capacity, wherein the UPSTREAM_TSPEC object and UPSTREAM_FLOWSPEC object are both set respectively to request and accept the selected upstream capacity.

In an embodiment, the method further comprises, at an intermediate node located on the optical path between the optical source node and the optical destination node, matching up a regeneration point and the intermediate node (24).

In an embodiment, the optical path comprises successive optical links each arranged between two adjacent nodes along the optical path,
wherein an available wavelength is selected for an optical link, the selected wavelength being identical in both directions on the optical link. The selected wavelength on the successive optical links between the source node and the destination node may be the same or different. In the case where the selected wavelength is different on two optical links, the optical node between the two optical links should comprise a wavelength converter.

In an embodiment, the wavelength converter may be implemented as a regenerator, so that both signal regeneration and wavelength conversion are achieved by the same optoelectronic device.

In an embodiment, the invention also provides a device for provisioning optical regeneration points in an optical network, the device comprising:
an input interface for receiving a connection demand designating a source node comprising an optical source transponder capable of generating optical signals having a plurality of downstream capacities, a destination node comprising an optical destination transponder capable of generating optical signals having a plurality of upstream capacities, an upstream load in an upstream direction from the destination node to the source node and a downstream load in a downstream direction from the source node to the destination node,
data repository in which is stored a map of the optical network and of the optical connections established in the optical network,
a calculation unit configured to perform:
   - selecting an optical path connecting the source node to the destination node and an wavelength available for provisioning an optical connection along the optical path in both directions,
   - selecting an upstream capacity in the plurality of upstream capacities higher than the upstream load, determining an upstream transparent reach of the optical destination transponder as a function of the upstream capacity,
   - selecting a downstream capacity in the plurality of downstream capacities higher than the downstream load, determining a downstream transparent reach of the optical source transponder as a function of the downstream capacity,
   the calculation unit being further configured to test if the upstream transparent reach is smaller than a total length of the optical path, and to define the location of one or more upstream regeneration points along the optical path, so that any two consecutive network elements of the sequence consisting of the destination node, the one or more upstream regeneration points and the source node are separated by a distance lower than the upstream transparent reach,
   the calculation unit being also configured to test if the downstream transparent reach is smaller than a total length of the optical path, defining the location of one or more downstream regeneration points along the optical path, so that any two consecutive network elements of the sequence consisting of the destination node, the one or more downstream regeneration points and the source node are separated by a distance lower than the downstream transparent reach,
   the device further comprising an output interface for transmitting the location of the regeneration points.

In an embodiment, if the downstream transparent reach is greater than the upstream transparent reach , then the upstream direction is said more demanding than the downstream direction, if the upstream transparent reach is greater than the downstream transparent reach, then the downstream direction is said more demanding than the upstream direction,
the device being further configured for provisioning the predefined regeneration points of the most demanding direction, and, for the less demanding direction, and selecting a subset of the provisioned regeneration points of the most demanding direction for provisioning the regeneration points of the less demanding direction.

In an embodiment, the device is further configured, for each regeneration point of the subset, for provisioning a bidirectional regenerator in the upstream direction,
and, for each regeneration point of the most demanding direction that is not part of the subset, provisioning a unidirectional regenerator in the most demanding direction.

Aspects of the invention stem for the observation that in a large IP transport network, IP Traffic patterns is more and more asymmetric due to the increase of new networked applications such as video streaming, CDN, Datacenter services.

Aspects of the invention come from the observation that a lot of bidirectional regenerators are available in current optical networks, and that it is desirable to exploit them even when the traffic is asymmetrical.

Aspects of the invention stem for the observation that the reach of an optical signal depends on its bit-rate.

### Brief description of the drawings

These and other aspects of the invention will be apparent from and elucidated with reference to the embodiments described hereinafter, by way of example, with reference to the drawings.
Figure 1 is a schematic representation of an asymmetric optical connection between two transponders.
Figure 2 is a schematic representation of a bidirectional regenerator comprising two transponders in a back-to-back configuration
Figure 3 is a schematic representation of a unidirectional regenerator comprising a single transponder.
Figure 4 is a schematic representation of an optical link and of regeneration points for the establishment of an asymmetric optical connection between two transponders
Figure 5 is a schematic representation of a hop-by-hop procedure performed to establish the optical connection represented on Figure 4.
Figure 6 is a flow chart of the method for provisioning an optical connection in an optical network.
Figure 7 is a bar graph representing the number of required regenerators by the above method allowing an asymmetric regeneration allocation compared with the number of required regenerators when a symmetric resource allocation is performed.
Figure 8 is a graph of savings provided by the asymmetric method with respect to the symmetric one.

### Detailed description of the embodiments

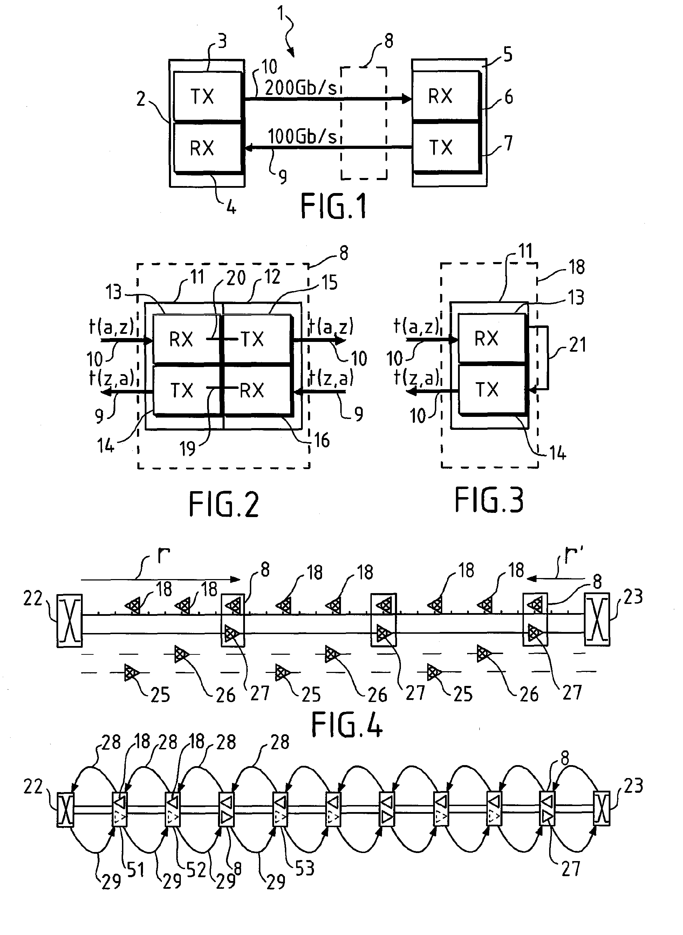

For the sake of illustration, with reference to figure 1, an asymmetric optical connection 1 between two transponders 2 and 5 is represented. The connection is established between an optical source transponder 2 and an optical destination transponder 5.

The optical source transponder 2 comprises an optical source transmitter 3 and an optical source receiver 4, and the optical destination transponder 5 comprises an optical destination transmitter 7 and an optical destination receiver 6.

The optical source transmitter 3 is able to transmit to the optical destination receiver 6 a downstream optical signal on a fixed wavelength channel, with preferably a capacity of 200Gb/s, in the downstream direction, as shown by arrow 10. The capacity of preferably 200Gb/s is chosen by configuring the optical source transmitter 3 by selecting an adapted downstream modulation format. The optical destination transmitter 7 is able to transmit to the optical source receiver 4 an upstream optical signal on the same fixed wavelength channel, with preferably a capacity of 100Gb/s, in the upstream direction shown by arrow 9. The capacity of preferably 100Gb/s is chosen by configuring the optical destination transmitter 7 by selecting an adapted upstream modulation format.

Physical degradations of an optical signal propagating along a path depend on the modulation format of the optical signal. Therefore, the transparent reach of the optical signal also depends on the modulation format as shown, for example, by the following table, wherein in this example the reach values are obtained by considering 50GHz channel spacing and a Soft-Decision forward error correction (SD-FEC), and a symbol rate of 32.5GBd:

**Table 1**

| ***Modulation format*** | ***Bit rate (Gb*/*s)*** | ***Reach (km)*** |
|---|---|---|
| BPSK | 100 | 4800 |
| QPSK | 200 | 3000 |
| 8QAM | 400 | 1200 |
| 16QAM | 500 | 500 |

The upstream and downstream optical signals propagating with the upstream and downstream modulation formats chosen may require an intermediate regeneration on the path. A regenerator 8 may be required on the path, as a function of the transparent reach in both directions.

Such a regenerator 8 is represented with reference to figure 2. The regenerator 8 is a bidirectional regenerator. The regenerator 8 comprises two transponders 11, 12 in a back-to-back configuration. The regeneration consists of a signal reception, signal correction and then a signal transmission. The first transponder 11 comprises a receiver 13 for receiving the downstream optical signal t(a,z). This receiver 13 is linked to a transmitter 15 of the second transceiver 12 in order to allow the signal to be re-transmitted. The downstream optical signal t(a,z) is converted into a downstream electrical signal by the receiver 13. The receiver 13 performs error corrections by using the Forward Error Correction (FEC) code encoded in the received signal. This downstream electrical signal is transmitted by the electrical link 20 to the transmitter 15. The transmitter 15 then re-converts the downstream electrical signal into an optical signal which is the regenerated downstream optical signal t(a,z). The transmitter 15 re-encodes a FEC code in the transmitted signal. The first transponder 11 also comprises a transmitter 14 linked by an electrical link 19 to a receiver 16 of the second transceiver 12 in order to perform the same regeneration as described above on the upstream optical signal t(z,a) in the upstream direction. The bidirectional regenerator 8 allows performing bidirectional regeneration on a bidirectional optical signal.

However, as the transparent reach of optical signals depends on their bit-rate, i.e. their modulation formats, the optical signal propagating with the higher bit-rate in one direction may require additional regeneration points with respect to the signal propagating with the lower bit-rate in the opposite direction.

Therefore, the bidirectional regenerator 8 may advantageously be replaced by a unidirectional regenerator 18 when a unidirectional regeneration is required. With reference to Figure 3, the regeneration is performed by a single transponder wherein the reception and the emission side are directly connected. This unidirectional regenerator 18 comprises a single transponder comprising a receiver 13 and a transmitter 14 linked by an electrical link 21. The use of the single transponder 11 for regeneration purposes allows the regeneration on a unique direction, which is either the downstream direction or the upstream direction.

With reference to Figure 4, an asymmetric optical connection between two transponders will be described. The optical connection is established between an optical source node 22 and an optical destination node 23 with a bidirectional wavelength allocation, i.e. with a same path and a same wavelength for the two directions. The bidirectional routing guarantees a simple network management, because the path computation, monitoring on fiber alarms, maintenance process are the same in the two directions.

In the downstream direction, the downstream reach is represented by arrow r. In the upstream direction, the upstream reach is represented with arrow r'. As the distance between the two transponders 22 and 23 is longer than both the reach r and the reach r', both the upstream and downstream optical signals are to be regenerated on the path. As a rule, the distance between two adjacent regenerators is lower than the upstream reach r' in the upstream direction. The regenerators are preferably located in intermediate optical nodes. Accordingly, the distance between two adjacent regenerators is lower than the downstream reach r in the downstream direction. This rule allows keeping a satisfying bit error rate.

In this example the upstream direction is the most demanding direction for regeneration since the upstream reach r' is lower than the downstream reach r. For example, this is due to the fact that the modulation rate in the upstream direction is higher than the modulation rate in the downstream direction. Therefore, upstream regeneration points 8, 18 and 24 are first provided for the upstream direction according to the above rule.

The downstream direction is the less demanding direction for regeneration. Downstream regeneration points are chosen for the downstream direction to comply with the same rule and preferably to match a subset of the upstream regeneration points. As shown on Figure 4, different combinations of downstream regeneration points are available. The downstream regeneration points may be chosen to match the points 25, or to match the points 26, or to match the points 27.

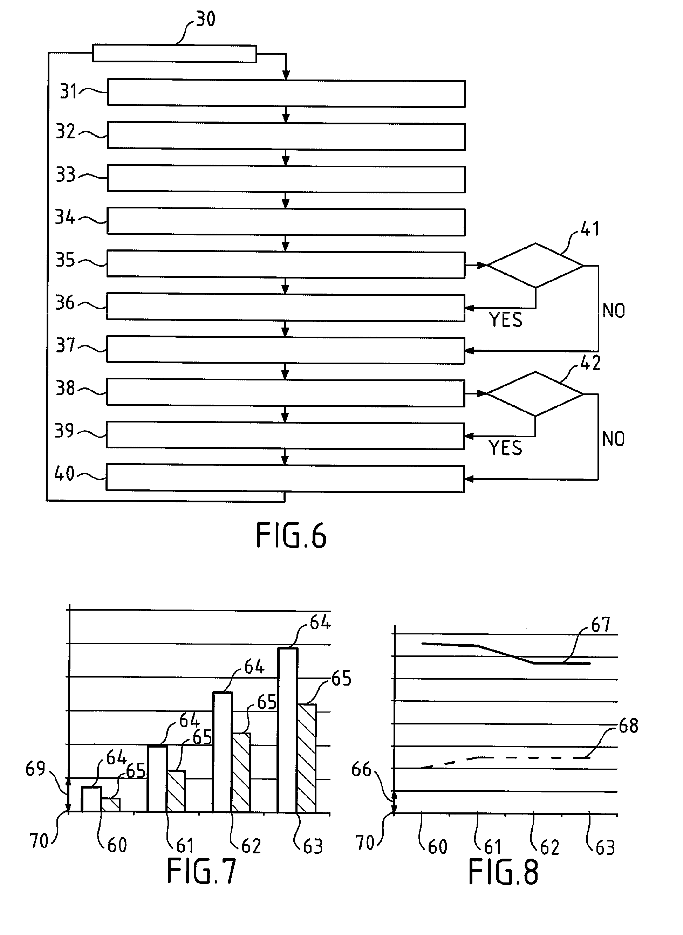

Regenerators are provided on the basis of a choice of the downstream regeneration points 27. When the upstream regeneration point matches a downstream regeneration point, a bidirectional regenerator 8 is provided. When the upstream regeneration point does not match a downstream regeneration point, a unidirectional regenerator 18 is provided in the upstream direction. This allows reducing the total number of optoelectronic regenerators compared to the systematic use of bidirectional regenerators. A method to provide regenerators on regeneration points will be later described with reference to Figure 6.

As shown by the example represented on Figure 4, the present disclosure enables the number of node interfaces used downstream to be different from the number of node interfaces used upstream. Indeed, in one direction the number of regenerators used may differ from the number of regenerators used in the opposite direction.

In US2008133770A1, a method is disclosed for setting up a two-directional connection between a source node and a destination node in a communication network with an Internet Protocol (IP) control plane.

In a GPMLS controlled network, a signaling protocol such as RSVP-TE can be used to enable to set up an optical path through the network. Such a protocol is, in the embodiment represented on Figure 5, the RSVP-TE resource reservation protocol with traffic engineering extension for Optical Networks deployed on the network to execute the reservation of optical resources. In the protocol, two adjacent nodes and/ or regenerators exchange a Path message in order to request a connection. The node or regenerator which sends the Path message will be referred to as an initiator node. The node or regenerator which receives the Path message will be referred to as a terminator node. The initiator node is to request a connection to a terminator node. Therefore, the initiator node sends the Path message comprising the characteristics of the connection to be requested to the terminator node in order to reserve the required resource in the terminator node. In the context of GMPLS, the Path message carries a list of objects which are a traffic descriptor of the optical connection and preferably given as following:
Path(GENERALIZED_LABEL_REQUEST, UPSTREAM_LABEL, LABEL_SET, SENDER_TSPEC, UPSTREAM_FLOWSPEC, etc.)

The list comprises objects which are traffic descriptors of the upstream optical connection, and objects which are traffic descriptors of the downstream optical connection.

In the upstream direction, the objects describe the resources such as the wavelength and the upstream capacity of the connection to be established between the source node and the destination node. In the downstream direction, the objects describe the resources such as the same wavelength and the downstream capacity of the connection to be established between the source node and the destination node.

LABEL_SET is an object which is used to constrained the choice of wavelengths to be reserved by the nodes towards the destination nodes in the optical network. In this embodiment, the end equipments i.e. source node and the destination are only capable of transmitting on a specific set of wavelengths. The object is used to restrict the lambda labels of the wavelengths to be established.

SENDER_SPEC is an object which requests the downstream capacity of the optical connection.

UPSTREAM_FLOWSPEC is an object which characterizes the resources that a source node admission controller has decided to allocate to the connection in the upstream direction. When receiving a Path message carrying an UPSTREAM_FLOWSPEC object, the destination node can immediately use the optical connection. UPSTREAM_FLOWSPEC may have the same values of traffic description parameters as those contained in the SENDER_TSPEC object or may be different.

Once the terminator node has received the Path message, if the terminator node can establish the optical connection, it sends to the initiator node a reservation message Resv comprising a list of objects to reserve the resources requested in the Path message.
Resv(GENERALIZED_LABEL, FLOWSPEC, UPSTREAM_TSPEC, etc.)

FLOWSPEC is an object which characterizes the resources that a initiator node admission controller has requested for the connection in the downstream direction.

UPSTREAM_TSPEC is an object which requests confirmation of the upstream capacity reserved for the optical connection in the upstream direction.

IF_ID_RSVP_HOP is an object carried in Path and Resv messages which configures RSVP-TE control protocol engine at each intermediate node and regenerator for the control of the regenerator interfaces reserved for both downstream and upstream direction.

With reference to Figure 5, a procedure to establish the asymmetric optical connection of the Figure 4 will be described.

The source node 22 is first configured as an initiator node which sends a Path message to the unidirectional regenerator 51 configured as a terminator node. The unidirectional regenerator 51 is therefore configured as a new initiator node and sends a Path message to the unidirectional regenerator 52 configured as a new terminator node. Each transmission of a Path message between two adjacent node and regenerator is called a hop 29. Several hops 29 are performed from the source node 22 to the destination node 23 to transmit the Path message through each intermediate node. Then, the destination node 23 sends a Resv message to the adjacent bidirectional regenerator 8 and several hops 28 are performed through each intermediate node and regenerator in the opposite direction compared to the hops 29 of the Path messages, in order to reach the source node 22. Some of these hops 28 and 29 are further described.

When performing the hop 29, the Path message arrives at the Regenerator 51, the Previous Hop Address parameter of its IF_ID_RSVP_HOP object is set to source node 22 address. Performing the following hop 29, when the Path message 29 arrives at the regenerator 52, the Previous Hop Address parameter of its IF_ID_RSVP_HOP object is set to node address, i.e. node comprising the regenerator 8, and so on until the destination node 23. Then, the destination node sends a Resv message. Performing the hop 28, when the Resv message sent by the regenerator 52 arrives at the regenerator 8, the Next Hop Address parameter of its IF_ID_RSVP_HOP object is set to the node comprising the regenerator 52 address. Performing the following hop 28, when the Resv message 28 arrives at source node 22, the Next Hop Address parameter of its IF_ID_RSVP_HOP object is set to regenerator 52 address.

Therefore, the Lambda LSP uses a common downstream and upstream wavelength and the capacity reserved is asymmetric.

With reference to Figure 6, a method for provisioning an optical connection in an optical network will now be described.

The method allows a bidirectional routing and a bidirectional wavelength assignment, and an asymmetric regeneration allocation as shown on the example previously described with reference to Figure 5. A connection demand is defined by a source node A, a destination node Z, an upstream capacity t(z,a) and a downstream capacity t(a,z).
For each connection demand present in a traffic matrix to deploy in the optical network, the method performs the following steps:
1) In a step 31, to find a route from the source node A to the destination node Z. The same route is used in the upstream direction: route(A,Z) =route(Z,A);
2) In a step 32, to assign the same wavelength λ for the two directions of optical connections A(A,Z) = λ(Z,A);
3) In a step 33, to determine a downstream capacity ci in a set of capacities supported by a source transponder in the source node A so that t(a,z) ≤ ci, where ci is the minimal capacity in the set of capacity supported by the source transponder satisfying the inequality;
4) In a step 34, to determine an upstream capacity ci' in a set of capacities supported by a destination transponder in the destination node Z so that t(z,a) ≤ ci', where ci' is the minimal capacity in the set of capacity supported by the destination transponder satisfying the inequality;
5) In a step 35, to determine a downstream transparent reach r, of an optical signal emitted by the source transponder and associated to the route (A,Z). The downstream transparent reach r may be determined for example by considering the values reported in Table 1. Then, a test 41 is performed. The test 41 comprises to test if the downstream and upstream capacities ci and ci' selected for the source and destination transponders are equal or not. If ci ≠ ci', the next step to perform is a step 36. By contrast, if ci = ci', an upstream transparent reach r' is set to the same value as the downstream transparent reach r and the next step performed is a step 37.
6) In the step 36, to determine the upstream transparent reach r' of the optical signal emitted by the destination transponder and associated to the route (Z,A), for example by considering the values reported in Table 1;.
7) In step 37, to determine downstream regeneration points by considering the downstream transparent reach r and to perform a test 42. The test 42 comprises to test if the downstream and upstream capacities ci and ci' selected for the source and destination transponders are equal or not. If ci ≠ ci', the next step to perform is a step 38. By contrast, if ci = ci' upstream regeneration points are set at the same positions as the determined downstream regeneration points and the next step performed is a step 39.
8) In the step 38, to determine the upstream regeneration points by considering the upstream reach r;
9) In step 39, to allocate the source and destination transponders, source and destination receivers and the necessary unidirectional regenerators on the route (A,Z).
10) In step 40, to allocate the source and destination transponders, source and destination receivers and the necessary unidirectional regenerators on the route (Z,A).
In a loop step 30, to perform the steps 31 to 40 for the next connection demand of the traffic matrix.

In the example provided with reference of Figure 5, the number of required regenerators is computed when the traffic matrix is not symmetric.

A device is provided to perform the steps of the method above described, in order to provision an optical connection in an optical network.

The device comprises a data repository in which is stored a map of the optical network and of the optical connections established in the optical network. The map may be implemented in various manners. For example, the map is a computer file comprising numerical values encoding the location of each node which is part of the optical network, the available capacities of each transponder which is part of each node, the frequency occupation of each optical link linking two adjacent nodes, etc.

The device also comprises an input interface for receiving a connection demand designating a source node, a destination node, an upstream load and a downstream load. The connection demand may be implemented in a lot of manners, as for example a computer file comprising numerical data encoding the location of the source and destination nodes in the optical network and the numerical values of the upstream and downstream loads. The source node comprises an optical source transponder capable of generating optical signals having a plurality of downstream capacities and the destination node comprises an optical destination transponder capable of generating optical signals having a plurality of upstream capacities. The upstream load is defined in an upstream direction from the destination node to the source node and the downstream load is defined in a downstream direction from the source node to the destination node,

The device also comprises a calculation unit for provisioning an optical connection along the optical path in both directions, configured to perform the selection of an optical path connecting the source node to the destination node among the combination of optical links from the map. The calculation unit also selects a wavelength available by considering the frequency occupation of the optical links forming the optical path selected. The calculation unit also selects an upstream capacity in the plurality of upstream capacities higher than the upstream load and determines an upstream transparent reach of the optical destination transponder as a function of the upstream capacity by a propagation calculation. For example, the propagation calculation is a Slip Step Fourier Method SSFM allowing calculating the Optical Noise to Signal Ration OSNR.

Similarly, the calculation unit also selects a downstream capacity in the plurality of downstream capacities higher than the downstream load and determines a downstream transparent reach of the optical source transponder as a function of the downstream capacity. The calculation unit is further configured to test if the upstream transparent reach is smaller than a total length of the optical path, and to define the location of one or more upstream regeneration points along the optical path, so that any two consecutive network elements of the sequence consisting of the destination node, the one or more upstream regeneration points and the source node are separated by a distance lower than the upstream transparent reach. Similarly, the calculation unit is also configured to test if the downstream transparent reach is smaller than a total length of the optical path, defining the location of one or more downstream regeneration points along the optical path, so that any two consecutive network elements of the sequence consisting of the destination node, the one or more downstream regeneration points and the source node are separated by a distance lower than the downstream transparent reach.

The device further comprises an output interface for transmitting the location of the regeneration points. The output interface may be implemented in various manners. For example, the output interface provides a user with the location of the regeneration points in a suitable format for the use in a network design, e.g. as a computer file or a paper printout comprising the IP address corresponding to the locations, or the Global Positioning System GPS coordinates, or the relative reach from a node etc.

With reference to Figure 7, the number of required regenerators by the above method allowing an asymmetric regeneration allocation is compared with the number of required regenerators when a symmetric resource allocation is performed. A traffic matrix with demands uniformly distributed source-destination access points has been considered for the European network comprising Single Mode Fibers and TeraLight Fibers. Therefore, an incoming traffic demand has the same probability to be allocated between two different nodes in the network. The number of demands in the traffic matrix is fixed for two scenarii. The first scenario tested 64 is the symmetric resource allocation, wherein the regenerators are bidirectional and the second one 65 is the asymmetric resource allocation performed thanks to the method described in Figure 6, wherein the regenerators are unidirectional. The number of demands is called load in the following. Four loads 60, 61, 62 and 63 have been considered, ranging from 100 to 400 demands with a step of 100. It is assumed that for the symmetrical network planning the traffic matrix is composed of the demands with the same capacity on the two directions and uniformly distributed between 100 and 500 Gb/s. When the asymmetrical planning is performed, for the most capacity direction, the same capacity requirement is considered than for the demand in bidirectional traffic demand. On the less capacity direction, the transported capacity is supposed uniformly distributed between 0 and the most capacity with the average of half the most capacity. The routing and resource allocation method above described is applied for computing the whole number of transponders for regenerators required by the network. Therefore, 2 transponders are provided per bidirectional regeneration point and 1 transponder is provided per unidirectional regeneration point. The reach values associated to the diverse modulation formats have been considered as shown in Table 1.

The number of saved transponders for regeneration has been computed by averaging the results obtained for twenty different draws of traffic matrices. The number of transponders used for regeneration is shown on the graph as a function of the traffic load for the two scenarii. The vertical axis is graduated from zero 70 by increment 69 of 50 transponders for regeneration count. The number of regenerators required is lower for the asymmetric regeneration allocation method 65 than for the symmetric one 64, whatever the load considered.

With reference to Figure 8, the savings provided by the asymmetric method with respect to the symmetric one are plot. The continuous line 67 represents the percentage of savings over the number of transponders used for regeneration. The dashed line 68 represents the percentage of savings over the overall number of transponders, add & drop modules and regenerators deployed on the network. The vertical axis is graduated from zero 70 by increment 66 of 5%. The savings on regenerators vary between 38% for the traffic matrix having 100 demands and 33% for the traffic matrix with 400 demands. On the whole number of transponders, savings translates into: 10% for the traffic matrix having 100 demands and 12.5% for the traffic matrix having 700 demands.

The method described hereinabove is a numerical method. However, it may also be implemented as an experimental method according to the same steps. The steps described may be performed in the sequential order described or not.

The device, which is a computation device, may be implemented through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, central processing unit (CPU), digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The computation device above described may be implemented in a unitary manner or in a distributed manner.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for provisioning an optical connection in an optical network,
wherein the method comprises:
- receiving a connection demand comprising a source node (22) identifier, a destination node (23) identifier, an upstream load in an upstream direction from the destination node to the source node and a downstream load in a downstream direction from the source node to the destination node,
wherein the optical network comprises the source node (22) comprising an optical source transponder (2) capable of generating optical signals having a plurality of downstream capacities, and the destination node (23) comprising an optical destination transponder (5) capable of generating optical signals having a plurality of upstream capacities,
- selecting an optical path connecting the source node (22) to the destination node (23) and a wavelength available for provisioning an optical connection along the optical path in both directions,
- selecting an upstream capacity in the plurality of upstream capacities higher than the upstream load, determining an upstream transparent reach of the optical destination transponder as a function of the upstream capacity,
- selecting a downstream capacity in the plurality of downstream capacities higher than the downstream load, determining a downstream transparent reach of the optical source transponder as a function of the downstream capacity,
- if the upstream transparent reach (r') is smaller than a total length of the optical path, locating one or more upstream regeneration points (18) along the optical path, so that any two consecutive network elements of the sequence consisting of the destination node, the one or more upstream regeneration points and the source node (22, 18, 23) are separated by a distance lower than the upstream transparent reach (r'),
- if the downstream transparent reach (r) is smaller than a total length of the optical path, locating one or more downstream regeneration points (27) along the optical path, so that any two consecutive network elements of the sequence consisting of the destination node, the one or more downstream regeneration points and the source node (22, 18, 23) are separated by a distance lower than the downstream transparent reach.

2. A method in accordance with claim 1, wherein
if the downstream transparent reach (r) is greater than the upstream transparent reach (r'), then the upstream direction is said more demanding than the downstream direction, if the upstream transparent reach is greater than the downstream transparent reach, then the downstream direction is said more demanding than the upstream direction,
the method comprising:
provisioning the predefined regeneration points (18) of the most demanding direction, and, for the less demanding direction, selecting a subset of the provisioned regeneration points (27) of the most demanding direction for provisioning the regeneration points of the less demanding direction.

3. A method in accordance with claim 2, comprising: for each regeneration point (27) of the subset, provisioning a bidirectional regenerator (8) adapted to regenerate optical signals in both the upstream direction and the downstream direction,
for each regeneration point (18) of the most demanding direction that is not part of the subset, provisioning a unidirectional regenerator (18) adapted to regenerate optical signals in the most demanding direction.

4. A method in accordance with any one of claims 1 to 3, comprising storing in a data repository the optical path, upstream and downstream capacities, wavelength and the regeneration points provisioned in both directions.

5. A method in accordance with any one of claims 1 to 4, wherein the optical source transponder and optical destination transponder are flexible transponders adapted to employ a plurality of modulation formats,
the method further comprising a step of configuring the optical source transponder and the optical destination transponder by selecting a downstream modulation format and an upstream modulation format among the plurality of modulation formats in relation with the selected downstream capacity and selected upstream capacity respectively.

6. A method in accordance with any one of claims 1 to 5, wherein the optical source transponder and optical destination transponder are flexible transponders adapted to employ a plurality of symbol rates,
the method further comprising a step of configuring the optical source transponder and the optical destination transponder by selecting a downstream symbol rate and an upstream symbol rate among the plurality of symbol rates in relation with the selected downstream capacity and selected upstream capacity respectively.

7. A method in accordance with any one of claims 1 to 6, wherein the method further comprises: controlling the establishment of the bidirectional connection between the optical source node and the optical destination node as a Label-Switched Path by a Generalized MPLS control plane, wherein the method further comprises the steps of exchanging connection request message (e.g. RSVP-TE Path) and connection accept message (e.g. RSVP-TE Resv) between the source node and the destination node, wherein
the Path message carries the objects GENERALIZED_LABEL_REQUEST, UPSTREAM_LABEL, LABEL_SET, SENDER_TSPEC, UPSTREAM_FLOWSPEC of the RSVP-TE protocol to define the attributes of the optical connection requested and the connection request message Path is propagated from the source node to the destination node along the optical path, and wherein the Resv message carries the objects GENERALIZED_LABEL, FLOWSPEC, UPSTREAM_TSPEC of the RSVP-TE protocol and is propagated from the destination node to the source node along the optical path to accept the resource reservation requested for the optical connection, wherein the SENDER_TSPEC object and FLOWSPEC object are both set to reserve the selected downstream capacity, wherein the UPSTREAM_TSPEC object and UPSTREAM_FLOWSPEC object are both set respectively to request and accept the selected upstream.

8. A method in accordance any one of claims 1 to 7, wherein the regeneration points are located in one or more intermediate nodes located on the optical path between the optical source node and the optical destination node, matching up a regeneration point and the intermediate node (24).

9. A method in accordance any one of claims 1 to 8, wherein the optical path comprises successive optical links defined as physical links between two adjacent nodes along the optical path, wherein a wavelength available is selected for an optical link, the wavelength being identical in both directions on the optical link.

10. A device for provisioning an optical connection in an optical network, the device comprising:
an input interface for receiving a connection demand designating a source node comprising an optical source transponder capable of generating optical signals having a plurality of downstream capacities, a destination node comprising an optical destination transponder capable of generating optical signals having a plurality of upstream capacities, an upstream load in an upstream direction from the destination node to the source node and a downstream load in a downstream direction from the source node to the destination node,
data repository in which is stored a map of the optical network and of the optical connections established in the optical network,
a calculation unit configured to perform:
- selecting an optical path connecting the source node to the destination node and an wavelength available for provisioning an optical connection along the optical path in both directions,
- selecting an upstream capacity in the plurality of upstream capacities higher than the upstream load, determining an upstream transparent reach of the optical destination transponder as a function of the upstream capacity,
- selecting a downstream capacity in the plurality of downstream capacities higher than the downstream load, determining a downstream transparent reach of the optical source transponder as a function of the downstream capacity,
the calculation unit being further configured to test if the upstream transparent reach is smaller than a total length of the optical path, and to define the location of one or more upstream regeneration points along the optical path, so that any two consecutive network elements of the sequence consisting of the destination node, the one or more upstream regeneration points and the source node are separated by a distance lower than the upstream transparent reach,
the calculation unit being also configured to test if the downstream transparent reach is smaller than a total length of the optical path, defining the location of one or more downstream regeneration points along the optical path, so that any two consecutive network elements of the sequence consisting of the destination node, the one or more downstream regeneration points and the source node are separated by a distance lower than the downstream transparent reach,
the device further comprising an output interface for transmitting the location of the regeneration points.

11. The device according to claim 10, wherein if the downstream transparent reach is greater than the upstream transparent reach , then the upstream direction is said more demanding than the downstream direction, if the upstream transparent reach is greater than the downstream transparent reach, then the downstream direction is said more demanding than the upstream direction,
being further configured for provisioning the predefined regeneration points of the most demanding direction, and, for the less demanding direction, and selecting a subset of the provisioned regeneration points of the most demanding direction for provisioning the regeneration points of the less demanding direction.

12. The device according to claim 11, further configured, for each regeneration point of the subset, for provisioning a bidirectional regenerator in the upstream direction,
And, for each regeneration point of the most demanding direction that is not part of the subset, provisioning a unidirectional regenerator in the most demanding direction.

## Amended claims

### Amended claims in accordance with Rule 137(2) EPC.

1. A method for provisioning an optical connection in an optical network,
wherein the method comprises:
- receiving a connection demand comprising a source node (22) identifier identifying a source node (22) of the optical network comprising an optical source transponder (2) capable of generating optical signals having a plurality of downstream bit rates, a destination node (23) identifier identifying a destination node (23) of the optical network comprising an optical destination transponder (5) capable of generating optical signals having a plurality of upstream bit rates, an upstream load in an upstream direction from the destination node to the source node and a downstream load in a downstream direction from the source node to the destination node,
- selecting an optical path connecting the source node (22) to the destination node (23) and a wavelength available for provisioning an optical connection along the optical path in both directions,
- selecting an upstream bit rate in the plurality of upstream bit rates higher than the upstream load, determining an upstream transparent reach of the optical destination transponder as a function of the upstream bit rate,
- selecting a downstream bit rate in the plurality of downstream bit rates higher than the downstream load, determining a downstream transparent reach of the optical source transponder as a function of the downstream bit rate,
- if the upstream transparent reach (r') is smaller than a total length of the optical path, locating one or more upstream regeneration points (18) along the optical path, so that any two consecutive network elements of the sequence consisting of the destination node, the one or more upstream regeneration points and the source node (22, 18, 23) are separated by a distance lower than the upstream transparent reach (r'),
- if the downstream transparent reach (r) is smaller than a total length of the optical path, locating one or more downstream regeneration points (27) along the optical path, so that any two consecutive network elements of the sequence consisting of the destination node, the one or more downstream regeneration points and the source node (22, 18, 23) are separated by a distance lower than the downstream transparent reach, wherein
if the downstream transparent reach (r) is greater than the upstream transparent reach (r'), then the upstream direction is said more demanding than the downstream direction, if the upstream transparent reach is greater than the downstream transparent reach, then the downstream direction is said more demanding than the upstream direction,
the method further comprising:
provisioning the predefined regeneration points (18) of the most demanding direction, and, for the less demanding direction, selecting a subset of the provisioned regeneration points (27) of the most demanding direction for provisioning the regeneration points of the less demanding direction, and
for each regeneration point (27) of the subset, provisioning a bidirectional regenerator (8) adapted to regenerate optical signals in both the upstream direction and the downstream direction,
for each regeneration point (18) of the most demanding direction that is not part of the subset, provisioning a unidirectional regenerator (18) adapted to regenerate optical signals in the most demanding direction.

2. A method in accordance with claim 1, comprising storing in a data repository the optical path, upstream and downstream bit rates, wavelength and the regeneration points provisioned in both directions.

3. A method in accordance with claim 1 or 2, wherein the optical source transponder and optical destination transponder are flexible transponders adapted to employ a plurality of modulation formats,
the method further comprising a step of configuring the optical source transponder and the optical destination transponder by selecting a downstream modulation format and an upstream modulation format among the plurality of modulation formats in relation with the selected downstream bit rate and selected upstream bit rate respectively.

4. A method in accordance with any one of claims 1 to 3, wherein the optical source transponder and optical destination transponder are flexible transponders adapted to employ a plurality of symbol rates,
the method further comprising a step of configuring the optical source transponder and the optical destination transponder by selecting a downstream symbol rate and an upstream symbol rate among the plurality of symbol rates in relation with the selected downstream bit rate and selected upstream bit rate respectively.

5. A method in accordance with any one of claims 1 to 4, wherein the method further comprises: controlling the establishment of the bidirectional connection between the optical source node and the optical destination node as a Label-Switched Path by a Generalized MPLS control plane, wherein the method further comprises the steps of exchanging connection request message (e.g. RSVP-TE Path) and connection accept message (e.g. RSVP-TE Resv) between the source node and the destination node, wherein
the Path message carries the objects GENERALIZED_LABEL_REQUEST, UPSTREAM_LABEL, LABEL_SET, SENDER_TSPEC, UPSTREAM_FLOWSPEC of the RSVP-TE protocol to define the attributes of the optical connection requested and the connection request message Path is propagated from the source node to the destination node along the optical path, and wherein the Resv message carries the objects GENERALIZED_LABEL, FLOWSPEC, UPSTREAM_TSPEC of the RSVP-TE protocol and is propagated from the destination node to the source node along the optical path to accept the resource reservation requested for the optical connection, wherein the SENDER_TSPEC object and FLOWSPEC object are both set to reserve the selected downstream bit rate, wherein the UPSTREAM_TSPEC object and UPSTREAM_FLOWSPEC object are both set respectively to request and accept the selected upstream.

6. A method in accordance any one of claims 1 to 5, wherein the regeneration points are located in one or more intermediate nodes located on the optical path between the optical source node and the optical destination node, matching up a regeneration point and the intermediate node (24).

7. A method in accordance any one of claims 1 to 6, wherein the optical path comprises successive optical links defined as physical links between two adjacent nodes along the optical path, wherein the step of selecting an optical path connecting the source node (22) to the destination node (23) and a wavelength available for provisioning an optical connection along the optical path in both directions comprises:
selecting a wavelength available for an optical link, the wavelength being identical in both directions on the optical link.

8. A device for provisioning an optical connection in an optical network, the device comprising:
an input interface for receiving a connection demand designating a source node comprising an optical source transponder capable of generating optical signals having a plurality of downstream bit rates, a destination node comprising an optical destination transponder capable of generating optical signals having a plurality of upstream bit rates, an upstream load in an upstream direction from the destination node to the source node and a downstream load in a downstream direction from the source node to the destination node,
data repository in which is stored a map of the optical network and of the optical connections established in the optical network,
a calculation unit configured to perform:
- selecting an optical path connecting the source node to the destination node and an wavelength available for provisioning an optical connection along the optical path in both directions,
- selecting an upstream bit rate in the plurality of upstream bit rates higher than the upstream load, determining an upstream transparent reach of the optical destination transponder as a function of the upstream bit rate,
- selecting a downstream bit rate in the plurality of downstream bit rates higher than the downstream load, determining a downstream transparent reach of the optical source transponder as a function of the downstream bit rate,
the calculation unit being further configured to test if the upstream transparent reach is smaller than a total length of the optical path, and to define the location of one or more upstream regeneration points along the optical path, so that any two consecutive network elements of the sequence consisting of the destination node, the one or more upstream regeneration points and the source node are separated by a distance lower than the upstream transparent reach,
the calculation unit being also configured to test if the downstream transparent reach is smaller than a total length of the optical path, defining the location of one or more downstream regeneration points along the optical path, so that any two consecutive network elements of the sequence consisting of the destination node, the one or more downstream regeneration points and the source node are separated by a distance lower than the downstream transparent reach,
the device further comprising an output interface for transmitting the location of the regeneration points.

9. The device according to claim 8, wherein if the downstream transparent reach is greater than the upstream transparent reach , then the upstream direction is said more demanding than the downstream direction, if the upstream transparent reach is greater than the downstream transparent reach, then the downstream direction is said more demanding than the upstream direction,
being further configured for provisioning the predefined regeneration points of the most demanding direction, and, for the less demanding direction, and selecting a subset of the provisioned regeneration points of the most demanding direction for provisioning the regeneration points of the less demanding direction.

10. The device according to claim 9, further configured, for each regeneration point of the subset, for provisioning a bidirectional regenerator in the upstream direction,
And, for each regeneration point of the most demanding direction that is not part of the subset, provisioning a unidirectional regenerator in the most demanding direction.
